(19) Europäisches Patentamt
European Patent Office
Office européen des brevets

(11) **EP 1 759 450 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **05706509.6**

(22) Anmeldetag: **15.02.2005**

(51) Int Cl.:
**H02M 7/49** (2007.01)    **H02M 5/458** (2006.01)

(86) Internationale Anmeldenummer:
**PCT/CH2005/000083**

(87) Internationale Veröffentlichungsnummer:
**WO 2006/000111 (05.01.2006 Gazette 2006/01)**

(54) **OBERSCHWINGUNGSARME MEHRPHASIGE UMRICHTERSCHALTUNG**

LOW HARMONIC MULTIPHASE CONVERTER CIRCUIT

CIRCUIT COMMUTATEUR POLYPHASE PAUVRE EN OSCILLATIONS HARMONIQUES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 EP 04405389**

(43) Veröffentlichungstag der Anmeldung:
**07.03.2007 Patentblatt 2007/10**

(73) Patentinhaber: **ABB Schweiz AG**
**5400 Baden (CH)**

(72) Erfinder:
• **STULZ, Christian**
**CH-8008 Zürich (CH)**
• **EICHLER, Christoph**
**CH-5417 Untersiggenthal (CH)**
• **SUTER, Erich**
**CH-5400 Baden (CH)**
• **ZUCKERBERGER, Adrian**
**CH-5417 Untersiggenthal (CH)**
• **JOERG, Pieder**
**CH-7013 Domat/Ems (CH)**
• **BERNER, Thomas**
**D-79761 Waldshut-Tiengen (DE)**

(74) Vertreter: **ABB Patent Attorneys**
**C/o ABB Schweiz AG**
**Intellectual Property CH-IP**
**Brown Boveri Strasse 6**
**5400 Baden (CH)**

(56) Entgegenhaltungen:
**GB-A- 2 330 254    US-A- 5 625 545**

EP 1 759 450 B1

## Beschreibung

### Technisches Gebiet

Die Erfindung bezieht sich auf das Gebiet der Leistungselektronik. Sie geht aus von einer mehrphasigen Umrichterschaltung dem Oberbegriff des unabhängigen Anspruchs.

### Stand der Technik

Mehrphasige Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen in einem üblicherweise eingangsseitig an die Umrichterschaltung angeschlossenen elektrischen Wechselspannungsnetz sowie auch an Phasen einer an die Umrichterschaltung gängigerweise angeschlossenen elektrischen Last zu erzeugen, und zum anderen mit einer möglichst geringen Anzahl an elektronischen Bauelementen möglichst grosse Leistungen zu übertragen. Eine geeignete mehrphasige Umrichterschaltung ist in der EP 0913 918 A2 angegeben und in Fig. 1 gezeigt. Darin ist die Umrichterschaltung als 18-pulsige dreiphasige Umrichterschaltung ausgeführt und weist für jede Phase eine Teilumrichterschaltung auf, wobei jede Teilumrichterschaltung eine 18-pulsige Gleichrichtereinheit, einen mit der Gleichrichtereinheit verbundenen Gleichspannungskreis und eine mit dem Gleichspannungskreis verbundene Wechselrichtereinheit umfasst. Gemäss der EP 0913 918 A2 beziehungsweise gemäss Fig. 1 bildet ein erster Wechselspannungsausgang einer jeden Wechselrichtereiriheit einen Phasenanschluss. Zweite Wechselspannungsausgänge der Wechselrichtereinheiten der Umrichterschaltung sind ferner in Sternschaltung verschaltet. Darüber hinaus weist die Umrichterschaltung einen einzigen Transformator mit einer Primärwicklung auf, welche üblicherweise an das elektrische Wechselspannungsnetz angeschlossen ist. Aufgrund der 18-Pulsigkeit der Umrichterschaltung weist der Transformator neun dreiphasige Sekundärwicklungen auf, wobei jeweils drei der neun dreiphasige Sekundärwicklungen einen Sekundärwicklungssatz bilden, so dass insgesamt drei Sekundärwicklungssätze gebildet sind.

In der GB 2 330 254 A ist ebenfalls eine mehrphasige Umrichterschaltung offenbart, bei der für jede Phase ebenfalls eine Teilumrichterschaltung vorgesehen ist, wobei jede Teilumrichterschaltung drei Gleichrichtereinheiten aufweist. An jede Gleichrichtereinheit ist dann ein Gleichspannungskreis und eine mit dem Gleichspannungskreis verbundene Wechselrichtereinheit angeschlossen. Ferner weist die Umrichterschaltung der GB 2 330 254 A drei Transformatoren mit jeweils einer Primärwicklung und mit jeweils drei dreiphasigen Sekundärwicklungen auf. Weiterhin ist jede Sekundärwicklung einem der drei Teilumrichterschaltungen zugeordnet, wobei dann jede Gleichrichtereinheit der zugehörigen Teilumrichterschaltung mit genau einer dieser Teilumrichterschaltung zugeordneten Sekundärwicklung verbunden ist.

Problematisch bei einer mehrphasigen Umrichterschaltung nach der EP 0913 918 A2 ist, dass, trotz der 18-Pulsigkeit der Gleichrichtereinheiten und damit der Umrichterschaltung insgesamt, an der Primärwicklung und damit im elektrischen Wechselspannungsnetz relevante Oberschwingungen grösser der siebzehnten Oberschwingung bezüglich der Grundschwingung der Spannung und des Stromes des elektrischen Wechselspannungsnetzes auftreten können, welchen dann das elektrische Wechselspannungsnetz, insbesondere bei einem schwachen elektrischen Wechselspannungsnetz mit hoher Netzimpedanz, entsprechend stark belasten. Solche Oberschwingungsrückwirkungen der Umrichterschaltung sind deshalb höchst unerwünscht.

### Darstellung der Erfindung

Aufgabe der Erfindung ist es deshalb, eine mehrphasige Umrichterschaltung anzugeben, die möglichst geringe Oberschwingungen bezüglich der Grundschwingung der Spannung und des Stromes eines eingangsseitig an die Umrichterschaltung angeschlossenen elektrischen Wechselspannungsnetzes erzeugt und welche zudem einfach und robust aufgebaut ist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe mehrphasige Umrichterschaltung umfasst allgemein $p \geq 3$ Ausgangs-Phasen und eine für jede Phase vorgesehene Teilumrichterschaltung, wobei jede Teilumrichterschaltung, eine Gleichrichtereinheit, einen mit der Gleichrichtereinheit verbundenen Gleichspannungskreis und eine mit dem Gleichspannungskreis verbundene Wechselrichtereinheit aufweist. Weiterhin bildet ein erster Wechselspannungsausgang einer jeden Wechselrichtereinheit einen Phasenanschluss. Ferner sind zweite Wechselspannungsausgänge der Wechselrichtereinheiten in Sternschaltung verschaltet. Erfindungsgemäss sind nun allgemein n Transformatoren mit jeweils einer Primärwicklung und mit jeweils m dreiphasigen Sekundärwicklungen vorgesehen, wobei $n \geq 2$ und $m \geq 3$ ist. Darüber hinaus sind im Allgemeinen p Sekundärwicklungssätze vorgesehen, wobei jeder Sekundärwicklungssatz durch jeweils $\dfrac{m}{p}$ dreiphasige Sekundärwicklungen eines jeden Transformators gebildet ist und jeder Sekundärwicklungssatz mit den zugehörigen Sekundärwicklungen mit der Gleichrichtereinheit jeweils einer Teilumrichterschaltung verbunden ist. Damit ist jeder Sekundärwicklungssatz nur jeweils einer Teilumrichterschaltung beziehungsweise der Gleichrichtereinheit nur jeweils einer Teilumrichterschaltung zugeordnet, wobei dabei dann sämtliche Sekundärwicklungen dieses Sekundärwicklungssatzes mit der Gleichrichtereinheit der zugeordneten Teilumrichterschaltung verbunden sind. Dadurch, dass n ≥ 2 Transformatoren vorgesehen sind und jeder Sekundärwicklungssatz durch jeweils $\frac{m}{p}$ dreiphasige Sekundärwicklungen eines jeden Transformators gebildet sind und jeder Sekundärwicklungssatz mit den zugehörigen Sekundärwicklungen mit der Gleichrichtereinheit jeweils einer Teilumrichterschaltung verbunden ist, erhöht sich die effektive Pulsigkeit der Umrichterschaltung auf der Primärseite des Transformators, d.h. auf der Seite des an die Umrichterschaltung angeschlossenen elektrischen Wechselspannungsnetzes, bezogen auf die Pulsigkeit einer Gleichrichtereinheit. Durch die erhöhte Pulsigkeit ergeben sich mit Vorteil im wesentlichen nur sehr geringe Oberschwingungen unterhalb der erhöhten Pulsigkeit bezüglich der Grundschwingung der Spannung und des Stromes eines eingangsseitig an die Umrichterschaltung angeschlossenen elektrischen Wechselspannungsnetzes. Bestenfalls, d.h. je nach Betriebszustand, ergibt sich beispielsweise auf der Primärseite des Transformators bei einer erfindungsgemässen Umrichterschaltung mit Gleichrichtereinheiten mit 18-Pulsigkeit, p=3 Phasen und mit n=3 Transformatoren eine 54-Pulsigkeit bezüglich der Grundschwingung der Spannung und des Stromes des elektrischen Wechselspannungsnetzes, so dass vorteilhaft im wesentlichen nur sehr geringe Oberschwingungen kleiner der dreiundfünfzigsten Oberschwingung bezüglich der Grundschwingung der Spannung und des Stromes des elektrischen Wechselspannungsnetzes auftreten. Das elektrische Wechselspannungsnetz, insbesondere ein schwaches elektrisches Wechselspannungsnetz mit hoher Netzimpedanz, wird somit nicht oder nur in geringem Masse belastet.

Darüber hinaus ist die erfindungsgemässe Umrichterschaltung aufgrund der vorstehend genannten verwendeten Komponenten und deren Verschaltung einfach und robust aufgebaut.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

Kurze Beschreibung der Zeichnungen

Es zeigen:

Fig. 1     eine gängige Ausführungsform einer mehrphasigen 18-pulsigen Umrichterschaltung,

Fig. 2     eine erste Ausführungsform der erfindungsgemässen mehrphasigen Umrichterschaltung,

Fig. 3     eine zweite Ausführungsform der erfindungsgemässen mehrphasigen Umrichterschaltung,

Fig. 4     eine erste Ausführungsform einer Teilumrichterschaltung der erfindungsgemässen mehrphasigen Umrichterschaltung nach Fig. 1 oder Fig. 2 mit einer ersten Ausführungsform einer Wechselrichtereinheit,

Fig. 5     eine zweite Ausführungsform einer Wechselrichtereinheit der Teilumrichterschaltung nach Fig. 4,

Fig. 6     ein Frequenzspektrum einer eingangsseitigen Spannung einer gängigen mehrphasigen 12-pulsigen Umrichterschaltung,

Fig. 7     ein Frequenzspektrum eines eingangsseitigen Stromes einer gängigen mehrphasigen 12-pulsigen Umrichterschaltung,

Fig. 8     ein Frequenzspektrum einer eingangsseitigen Spannung der erfindungsgemässen Umrichterschaltung gemäss Fig. 2,

Fig. 9     ein Frequenzspektrum eines eingangsseitigen Stromes der erfindungsgemässen Umrichterschaltung gemäss Fig. 2 und

Fig. 10   eine dritte Ausführungsform der erfindungsgemässen mehrphasigen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

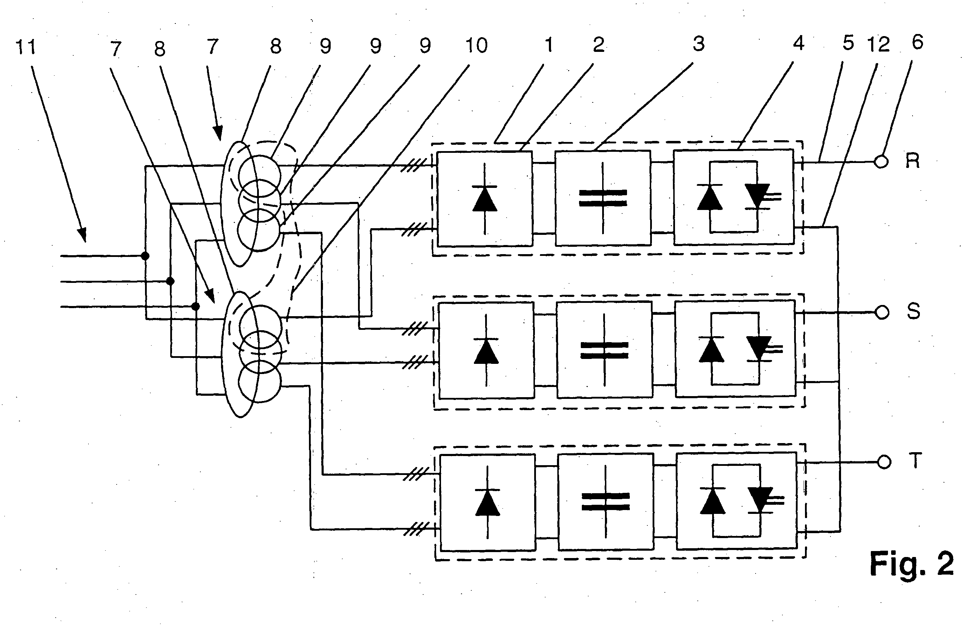

In Fig. 2 ist eine erste Ausführungsform der erfindungsgemässen mehrphasigen Umrichterschaltung gezeigt. Die Umrichterschaltung gemäss Fig. 2 weist p=3 Phasen R, S, T auf, wobei allgemein p ≥ 3 Phasen R, S, T denkbar sind. Gemäss Fig. 2 umfasst die Umrichterschaltung eine für jede Phase R, S, T vorgesehene Teilumrichterschaltung 1, wobei jede Teilumrichterschaltung 1 eine Gleichrichtereinheit 2, einen mit der Gleichrichtereinheit 2 verbundenen Gleichspannungskreis 3 und eine mit dem Gleichspannungskreis 4 verbundene Wechselrichtereinheit 4 aufweist. Die Gleichrichtereinheit 2 gemäss Fig. 2 weist eine Pulsigkeit x=12 auf, wobei die Pulsigkeit x die Anzahl Schaltimpulse während einer Periodendauer der Spannung eines an die Umrichterschaltung eingangsseitig angeschlossenen elektrischen Wechselspannungsnetzes 11 bezeichnet. Darüber hinaus bildet ein erster Wechselspannungsausgang 5 einer jeden Wechselrichtereinheit 4 einen Phasenanschluss 6. Zudem sind zweite Wechselspannungsausgänge 12 der Wechselrichtereinheiten 5 gemäss Fig. 2 in Sternschaltung verschaltet.

Erfindungsgemäss sind nun allgemein n Transformatoren 7 mit jeweils einer Primärwicklung 8 und mit jeweils m dreiphasigen Sekundärwicklungen 9 vorgesehen, wobei $n \geq 2$ und $m \geq 3$ ist. Gemäss Fig. 2 sind es n=2 Transformatoren mit jeweils m=3 dreiphasigen Sekundärwicklungen 9. Darüber hinaus sind allgemein p Sekundärwicklungssätze 10 vorgesehen, wobei jeder Sekundärwicklungssatz 10 durch jeweils $\frac{m}{p}$ dreiphasige Sekundärwicklungen 9 eines jeden Transformators 7 gebildet ist und jeder Sekundärwicklungssatz 10 mit den zugehörigen Sekundärwicklungen 9 mit der Gleichrichtereinheit 2 jeweils einer Teilumrichterschaltung 1 verbunden ist. Jeder Sekundärwicklungssatz umfasst dann $\frac{m \cdot n}{p}$ Sekundärwicklungen 9. Damit ist, wie auch in Fig. 2 gezeigt, jeder Sekundärwicklungssatz 10 nur jeweils einer Teilumrichterschaltung 1 beziehungsweise der Gleichrichtereinheit 2 nur jeweils einer Teilumrichterschaltung 1 zugeordnet, wobei dabei dann sämtliche Sekundärwicklungen 9 dieses Sekundärwicklungssatzes 10 mit der Gleichrichtereinheit 2 der zugeordneten Teilumrichterschaltung 1 verbunden sind. Gemäss Fig. 2 sind bei p=3 Phasen R, S, T auch p=3 Sekundärwicklungssätze 10 vorgesehen, wobei jeder Sekundärwicklungssatz 10 durch jeweils eine dreiphasige Sekundärwicklung 9 eines jeden Transformator 7 gebildet ist und jeder Sekundärwicklungssatz 10 zwei Sekundärwicklungen 9 umfasst.

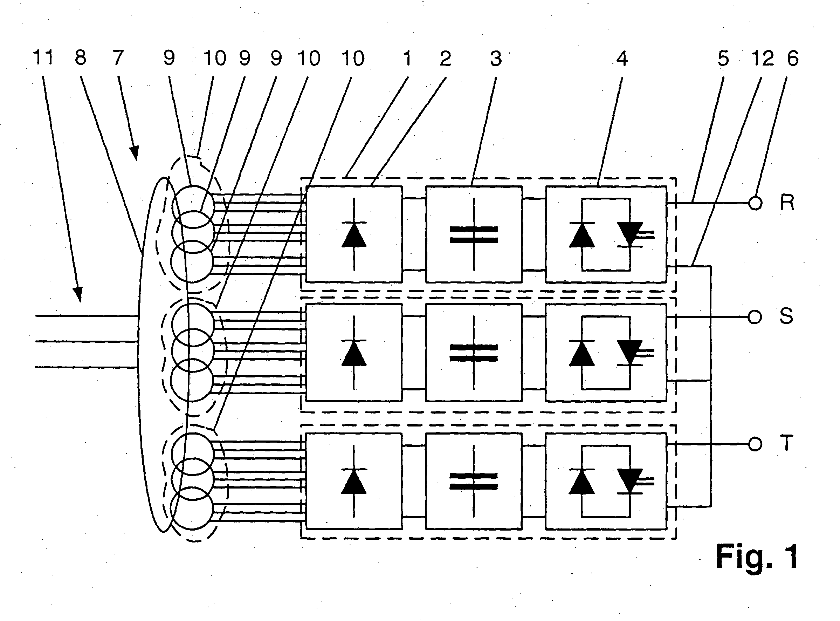

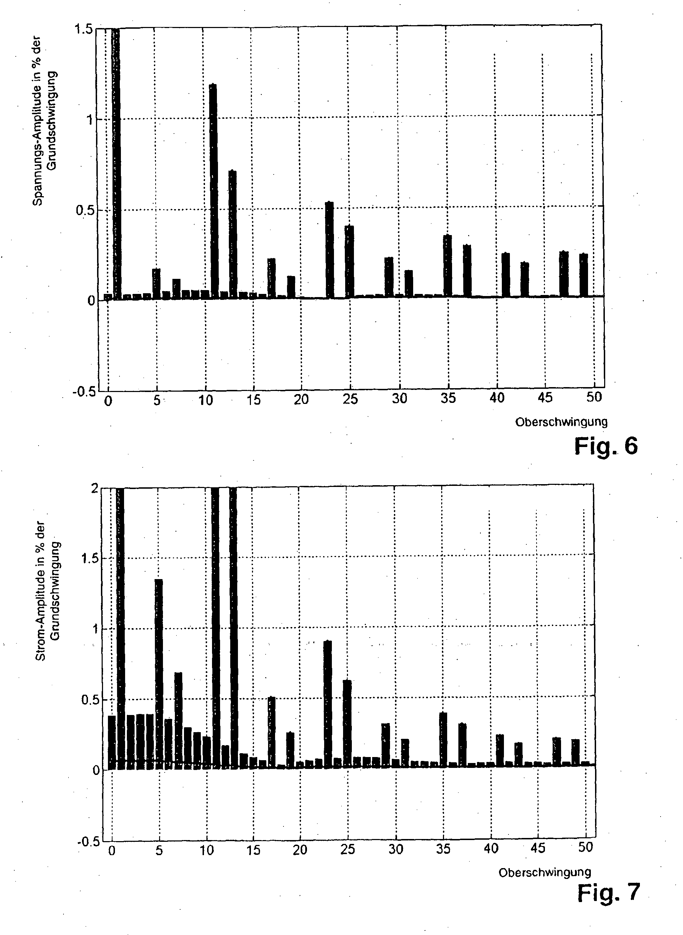

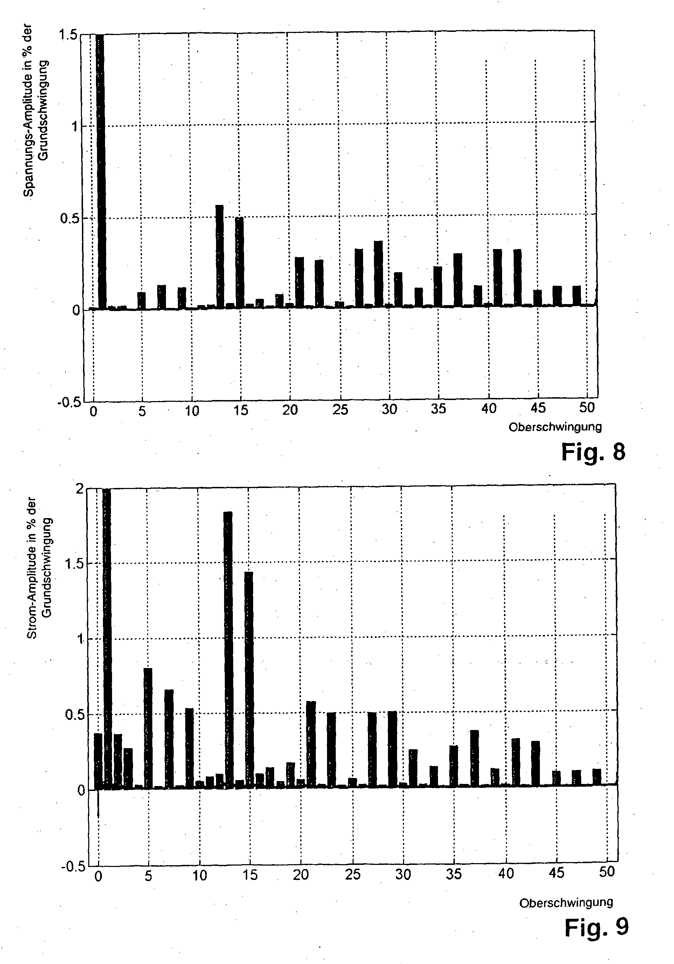

Aufgrund der allgemein $n \geq 2$ Transformatoren 7 und dass jeder Sekundärwicklungssatz 10 durch jeweils $\frac{m}{p}$ dreiphasige Sekundärwicklungen 9 eines jeden Transformators 7 gebildet ist und jeder Sekundärwicklungssatz 10 mit seinen sämtlichen zugehörigen Sekundärwicklungen 9 mit der Gleichrichtereinheit 2 jeweils einer Teilumrichterschaltung 1 verbunden ist, erhöht sich die effektive Pulsigkeit der Umrichterschaltung auf der Primärseite 8 des Transformators 7, d.h. auf der Eingangsseite der Umrichterschaltung, bezogen auf die Pulsigkeit einer Gleichrichtereinheit 1. Durch die erhöhte Pulsigkeit ergeben sich vorteilhaft im wesentlichen nur sehr geringe Oberschwingungen unterhalb der erhöhten Pulsigkeit bezüglich der Grundschwingung der Spannung und des Stromes eines eingangsseitig an die Umrichterschaltung angeschlossenen elektrischen Wechselspannungsnetzes 11. In Fig. 6 ist dazu ein Frequenzspektrum einer eingangsseitigen Spannung einer gängigen mehrphasigen Umrichterschaltung mit der Pulsigkeit x=12 der Gleichrichtereinheit 2 gezeigt. Der Aufbau einer solchen 12-pulsigen Umrichterschaltung entspricht der eingangs beschriebenen bekannten Umrichterschaltung mit der Pulsigkeit x=18 gemäss Fig. 1, wobei im Unterschied zu Fig. 1 die gängige 12-pulsige Umrichterschaltung 12-pulsig ausgeführte Gleichrichtereinheiten aufweist und der einzige Transformator 7 dann sechs dreiphasige Sekundärwicklungen 9 umfasst, wobei jeweils zwei der sechs dreiphasigen Sekundärwicklungen 9 einen Sekundärwicklungssatz 10 bilden, so dass insgesamt drei Sekundärwicklungssätze 10 gebildet sind. In Fig. 7 ist zudem ein Frequenzspektrum eines eingangsseitigen Stromes gängigen mehrphasigen Umrichterschaltung mit der Pulsigkeit x=12 der Gleichrichtereinheit 2 gezeigt. Zur besseren Anschaulichkeit der vorstehend genannten Vorteile der erhöhten effektiven Pulsigkeit der erfindungsgemässen Umrichterschaltung gemäss Fig. 2 ist in Fig. 8 ein Frequenzspektrum der eingangsseitigen Spannung der erfindungsgemässen Umrichterschaltung nach Fig. 2 und in Fig. 9 ein Frequenzspektrum des eingangsseitigen Stromes der erfindungsgemässen Umrichterschaltung nach Fig. 2. gezeigt. Im besten Fall, d.h. je nach Betriebszustand, ergibt sich beispielsweise auf der Primärseite des Transformators 7 bei der erfindungsgemässen Umrichterschaltung mit Gleichrichtereinheiten 2 der Pulsigkeit x=12, p= 3 Phasen R, S, T und mit n=2 Transformatoren eine 36-Pulsigkeit ($x \cdot p = 36$) bezüglich der Grundschwingung der Spannung und des Stromes des elektrischen Wechselspannungsnetzes 11, so dass vorteilhaft  im wesentlichen nur sehr geringe Oberschwingungen kleiner der fünfunddreissigsten Oberschwingung bezüglich der Grundschwingung der Spannung und des Stromes des elektrischen Wechselspannungsnetzes 11 auftreten. Das elektrische Wechselspannungsnetz 11, insbesondere ein schwaches elektrische Wechselspannungsnetz mit hoher Netzimpedanz, wird somit mit Vorteil nicht oder nur in geringem Masse belastet.

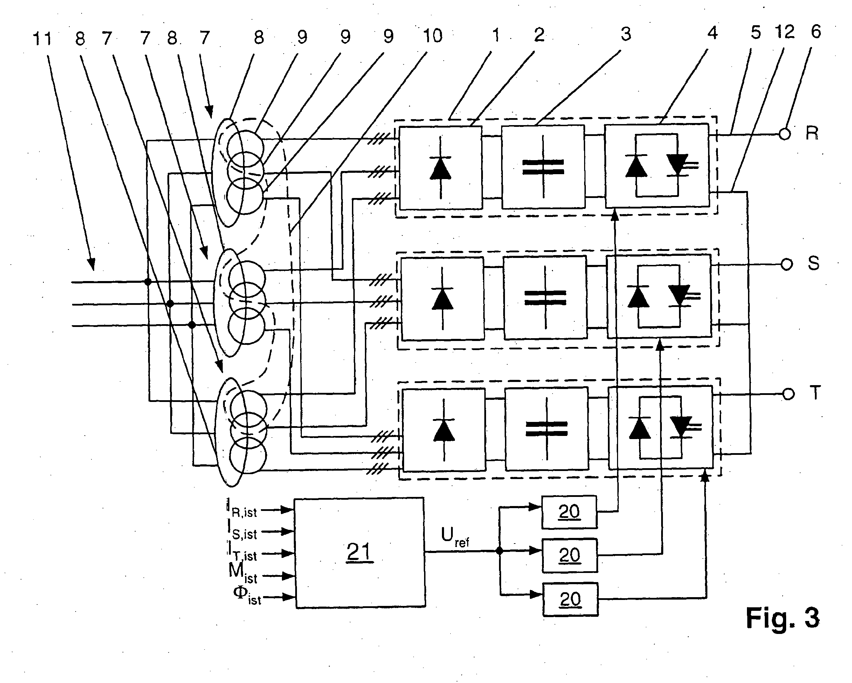

In Fig. 3 ist eine zweite Ausführungsform der erfindungsgemässen mehrphasigen Umrichterschaltung gezeigt. Im Unterschied zu der ersten Ausführungsform gemäss Fig. 2 weist die jeweilige Gleichrichtereinheit 2 gemäss Fig. 3 eine Pulsigkeit x=18 auf. Ferner sind im Unterschied zur ersten Ausführungsform gemäss Fig. 2 bei der zweiten Ausführungsform gemäss Fig. 3 n=3 Transformatoren mit jeweils m=3 dreiphasigen Sekundärwicklungen 9 vorgesehen. Gemäss Fig. 3 sind darüber hinaus bei p=3 Phasen R, S, T auch p=3 Sekundärwicklungssätze 10 vorgesehen, wobei jeder Sekundärwicklungssatz 10 durch jeweils eine dreiphasige Sekundärwicklung 9 eines jeden Transformator 7 gebildet ist und jeder Sekundärwicklungssatz 10 drei Sekundärwicklungen 9 umfasst. Bei der Umrichterschaltung gemäss der zweiten Ausführungsform nach Fig. 3 ergibt sich im besten Fall, d.h. je nach Betriebszustand, beispielsweise auf der Primärseite des Transformators 7 mit Gleichrichtereinheiten 2 der Pulsigkeit x=18, p=3 Phasen R, S, T und mit n=3 Transformatoren eine 54-Pulsigkeit (x · p = 54) bezüglich der Grundschwingung der Spannung und des Stromes des elektrischen Wechselspannungsnetzes 11, so dass mit Vorteil im wesentlichen nur sehr geringe Oberschwingungen kleiner der dreiundfünfzigsten Oberschwingung bezüglich der Grundschwingung der Spannung und des Stromes des elektrischen Wechselspannungsnetzes 11 auftreten.

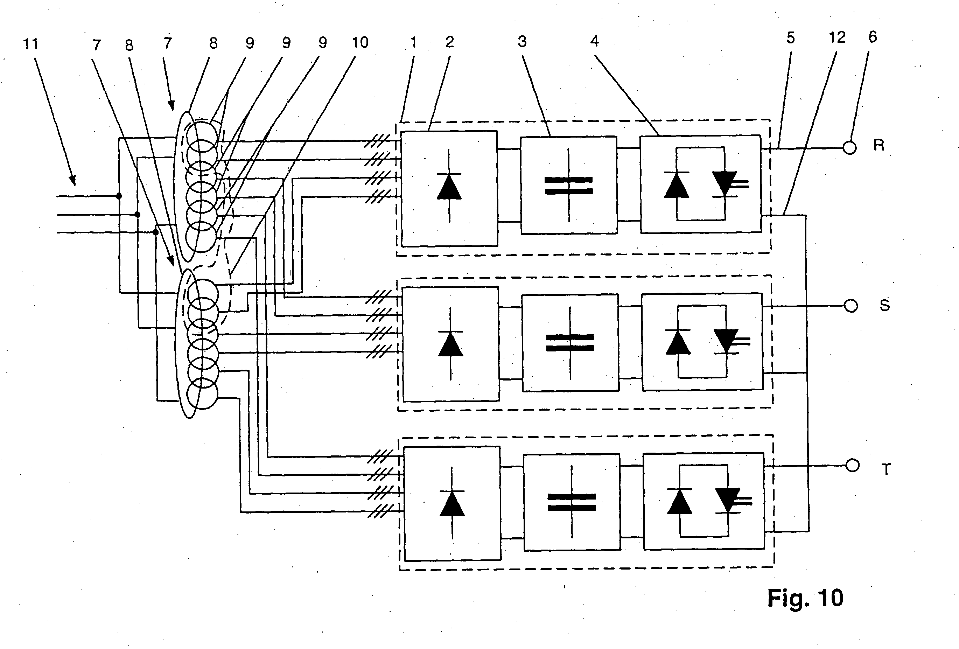

In Fig. 10 ist eine dritte Ausführungsform der erfindungsgemässen mehrphasigen Umrichterschaltung gezeigt. Im Unterschied zu der ersten und zweiten Ausführungsform gemäss Fig. 2 und Fig. 3 weist die jeweilige Gleichrichtereinheit 2 gemäss Fig. 10 eine Pulsigkeit x=24 auf. Ferner sind bei der dritten Ausführungsform gemäss Fig. 10 n=2 Transformatoren mit jeweils m=6 dreiphasigen Sekundärwicklungen 9 vorgesehen. Gemäss Fig. 10 sind darüber hinaus bei p=3 Phasen R, S, T auch p=3 Sekundärwicklungssätze 10 vorgesehen, wobei jeder Sekundärwicklungssatz 10 durch jeweils zwei dreiphasige Sekundärwicklungen 9 eines jeden Transformator 7 gebildet ist und jeder Sekundärwicklungssatz 10 vier Sekundärwicklungen 9 umfasst. Bei der Umrichterschaltung gemäss der dritten Ausführungsform nach Fig. 10 ergibt sich im besten Fall, d.h. je nach Betriebszustand, beispielsweise auf der Primärseite des Transformators 7 mit Gleichrichtereinheiten 2 der Pulsigkeit x=24, p=3 Phasen R, S, T und mit n=2 Transformatoren eine 72-Pulsigkeit (x · p = 72) bezüglich der Grundschwingung der Spannung und des Stromes des elektrischen Wechselspannungsnetzes 11, so dass mit Vorteil im wesentlichen nur sehr geringe Oberschwingungen kleiner der einundsiebzigsten Oberschwingung bezüglich der Grundschwingung der Spannung und des Stromes des elektrischen Wechselspannungsnetzes 11 auftreten.

Vorzugsweise sind allgemein und bei den Ausführungsformen der erfindungsgemässen Umrichterschaltung nach Fig. 2 und Fig. 3 die dreiphasigen Sekundärwicklungen 9 bezüglich eines Sekundärwicklungssatzes 10 zueinander phasenverschoben. Die bevorzugte Phasenverschiebung bezüglich jeweils zweier Sekundärwicklungen 9 eines Sekundärwicklungssatzes 10 beträgt ein ganzzahliges Vielfaches von $(\frac{60 \cdot p}{n \cdot m})$ Grad. Bei der ersten Ausführungsform der erfindungsgemässen Umrichterschaltung nach Fig. 2 ergibt sich somit eine Phasenverschiebung bezüglich jeweils zweier Sekundärwicklungen 9 eines Sekundärwicklungssatzes 10 von einem ganzzahligen Vielfachen von 30 Grad. Ferner ergibt sich bei der zweiten Ausführungsform der erfindungsgemässen Umrichterschaltung nach Fig. 3 eine Phasenverschiebung bezüglich jeweils zweier Sekundärwicklungen 9 eines Sekundärwicklungssatzes 10 von einem ganzzahligen Vielfachen von 20 Grad. Weiterhin ergibt sich bei der dritten Ausführungsform der erfindungsgemässen Umrichterschaltung nach Fig. 10 eine Phasenverschiebung bezüglich jeweils zweier Sekundärwicklungen 9 eines Sekundärwicklungssatzes 10 von einem ganzzahligen Vielfachen von 15 Grad. Diese Phasenverschiebungen ergeben im besten Fall, d.h. je nach Betriebszustand, auf der Primärseite des Transformators 7 die vorteilhaft die vorstehend zu Fig. 2, Fig. 3 und Fig. 10 bereits angegeben Pulsigkeiten.

Darüber hinaus sind allgemein und bei den Ausführungsformen der erfindungsgemässen Umrichterschaltung nach Fig. 2, Fig. 3 und Fig. 10 die dreiphasigen Sekundärwicklungen 9 bezüglich eines Transformators 7 zueinander phasenverschoben. Die bevorzugte Phasenverschiebung bezüglich jeweils zweier Sekundärwicklungen 9 eines Transformators 7 beträgt ein ganzzahliges Vielfaches von $(\frac{60}{n \cdot m})$ Grad beziehungsweise $(\frac{360}{x \cdot p})$ Grad, wobei x die bereits erwähnte Pulsigkeit einer Gleichrichtereinheit 2 ist. Bei vorstehend angegeben Formeln zur Phasenverschiebung bezüglich jeweils zweier Sekundärwicklungen 9 eines Transformators 7 sind äquivalent. Bei der ersten Ausführungsform der erfindungsgemässen Umrichterschaltung nach Fig. 2 ergibt sich somit eine Phasenverschiebung bezüglich jeweils zweier Sekundärwicklungen 9 eines Transformators 7 von einem ganzzahligen Vielfachen von 10 Grad. Ferner ergibt sich bei der zweiten Ausführungsform der erfindungsgemässen Umrichterschaltung nach Fig. 3 eine Phasenverschiebung bezüglich jeweils zweier Sekundärwicklungen 9 eines Transformators 7 von einem ganzzahligen Vielfachen von 6 2/3 Grad. Darüberhinaus ergibt sich bei der dritten Ausführungsform der erfindungsgemässen Umrichterschaltung nach Fig. 10 eine Phasenverschiebung bezüglich jeweils zweier Sekundärwicklungen 9 eines Transformators 7 von einem ganzzahligen Vielfachen von 5 Grad. Diese Phasenverschiebung ergibt vorteilhaft eine sekundärseitige Auslöschung von Oberschwingungen bezüglich der Grundschwingung der Spannung und des Stromes eines eingangsseitig an die Umrichterschaltung angeschlossenen elektrischen Wechselspannungsnetzes.

Weiterhin sind allgemein und bei den Ausführungsformen der erfindungsgemässen Umrichterschaltung nach Fig. 2, Fig. 3 und Fig. 10 die Primärwicklungen 8 der Transformatoren 7 zueinander phasenverschoben. Die bevorzugte Phasenverschiebung bezüglich jeweils zweier Primärwicklungen beträgt ein ganzzahliges Vielfaches von 60/n Grad. Bei der ersten Ausführungsform der erfindungsgemässen Umrichterschaltung nach Fig. 2 und bei der dritten Ausführungsform nach Fig. 10 ergibt sich somit eine Phasenverschiebung bezüglich jeweils zweier Primärwicklungen 8 von einem ganzzahligen Vielfachen von 30 Grad. Ferner ergibt sich bei der zweiten Ausführungsform der erfindungsgemässen Umrichterschaltung nach Fig. 3 eine Phasenverschiebung bezüglich jeweils zweier Primärwicklungen 8 von einem ganzzahligen Vielfachen von einem ganzzahligen Vielfachen von 20 Grad. Durch diese vorstehend beschriebene Phasenverschiebung der Primärwicklungen 8 bezüglich jeweils zweier Transformatoren 7 ergibt sich ein baugleicher Anordnungsaufbau der Sekundärwicklungen 9 der Transformatoren 7, so dass die Herstellung vereinfacht werden kann und damit zusätzlich Kosten eingespart werden können.

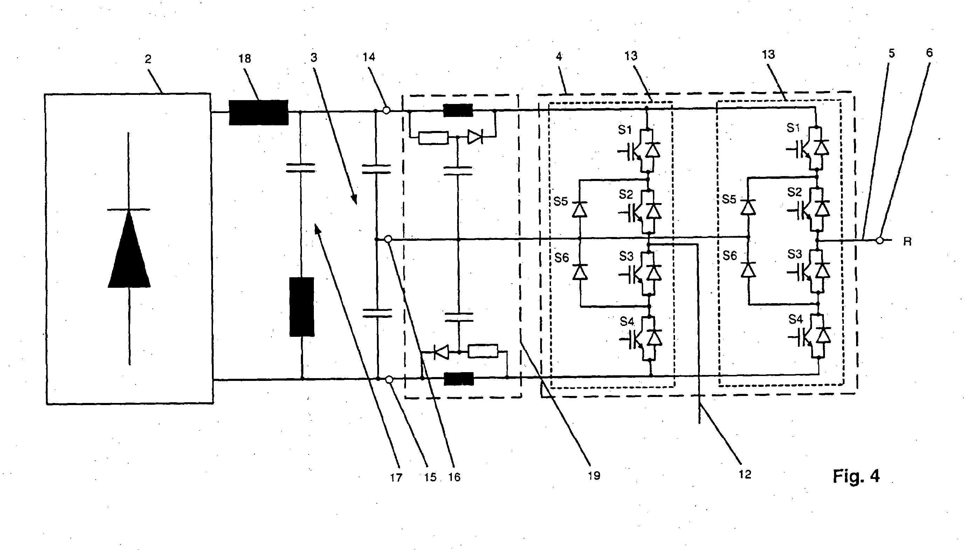

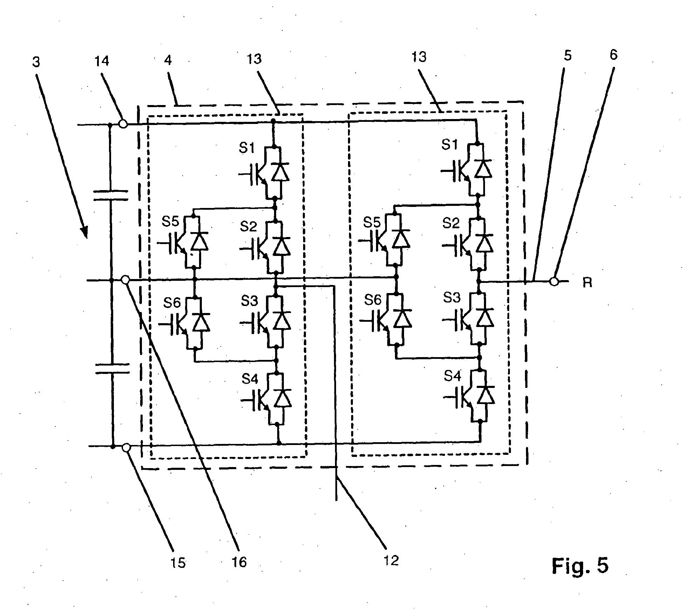

In Fig. 4 ist eine erste Ausführungsform einer Teilumrichterschaltung 1 der erfindungsgemässen mehrphasigen Umrichterschaltung nach Fig. 1 oder Fig. 2 mit einer ersten Ausführungsform einer Wechselrichtereinheit 4 dargestellt. Die Teilumrichterschaltung 1 umfasst den bereits erwähnten Gleichspannungskreis 3, der durch zwei in Serie geschaltete Kondensatoren gebildet ist und einen ersten Hauptanschluss 14, einen zweiten Hauptanschluss 15 und einen durch die zwei benachbarten und miteinander verbundenen Kondensatoren gebildeten Teilanschluss 16 aufweist. Die Wechselrichtereinheit 4 weist gemäss Fig. 4 zwei Zweigpaare 13 zur Schaltung von drei Schaltspannungsniveaus auf, wobei das jeweilige Zweigpaar 13 einen ersten, zweiten, dritten und vierten ansteuerbaren bidirektionalen Leistungshalbleiterschalter S1, S2, S3, S4 und einen fünften und sechsten Leistungshalbleiterschalter S5, S6 auf. Der jeweilige ansteuerbare bidirektionale Leistungshalbleiterschalter S1, S2, S3, S4 ist insbesondere gebildet durch einen hartgeschalteten Gate-Turn-Off Thyristor oder durch einen Bipolartransistor mit isoliert angeordneter Gateelektrode (IGBT) und durch eine zu dem Gate-Turn-Off Thyristor oder Bipolartransistor antiparallel geschaltete Diode. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen. Gemäss Fig. 4 ist der fünfte und sechste Leistungshalbleiterschalter S5, S6 ein nicht ansteuerbarer unidirektionaler Leistungshalbleiterschalter, jeweils gebildet durch eine Diode. In diesem Fall bildet der fünfte und sechste Leistungshalbleiterschalter eine passive Klemmschaltgruppe. Gemäss Fig. 4 sind bei jedem Zweigpaar 13 der erste, zweite, dritte und vierte Leistungshalbleiterschalter S1, S2, S3, S4 in Serie geschaltet und der erste Leistungshalbleiterschalter S1 ist mit dem ersten Hauptanschluss 14 und der vierte Leistungshalbleiterschalter S4 ist mit dem zweiten Hauptanschluss 15 verbunden. Desweiteren ist der fünfte und sechste Leistungshalbleiterschalter S5, S6 in Serie geschaltet, wobei der Verbindungspunkt des fünften Leistungshalbleiterschalters S5 mit dem sechsten Leistungshalbleiterschalter S6 mit dem Teilanschluss 16 verbunden ist, der fünfte Leistungshalbleiterschalter S6 mit dem Verbindungspunkt des ersten Leistungshalbleiterschalters S1 mit dem zweiten Leistungshalbleiterschalter S2 verbunden ist und der sechste Leistungshalbleiterschalter S6 mit dem Verbindungspunkt des dritten Leistungshalbleiterschalters S3 mit dem vierten Leistungshalbleiterschalter S4 verbunden ist. In Fig. 5 ist eine zweite Ausführungsform einer Wechselrichtereinheit 4 der Teilrichterschalturig 1 nach Fig. 4 gezeigt. Im Unterschied zur ersten Ausführungsform der Wechselrichtereinheit 4 nach Fig. 4 ist bei der zweiten Ausführungsform der Wechselrichtereinheit 4 gemäss Fig. 5 der fünfte und sechste Leistungshalbleiterschalter S5, S6 ebenfalls ein ansteuerbarer bidirektionaler Leistungshalbleiterschalter. Der jeweilige ansteuerbare bidirektionale Leistungshalbleiterschalter S5, S6 ist insbesondere gebildet durch einen hartgeschalteten Gate-Turn-Off Thyristor oder durch einen Bipolartransistor mit isoliert angeordneter Gateelektrode (IGBT) und durch eine zu dem Gate-Turn-Off Thyristor oder Bipolartransistor antiparallel geschaltete Diode. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen. Gemäss Fig. 5 bildet dann der fünfte und sechste Leistungshalbleiterschalter S5, S6 eine aktive Klemmschaltgruppe.

Vorzugsweise weist der Gleichspannungskreis 3 gemäss Fig. 4 einen auf eine Oberschwingungsfrequenz abgestimmten Resonanzkreis 17 auf. Der Resonanzkreis 17 umfasst eine Induktivität und eine in Serie zu dieser Induktivität geschaltete Kapazität, wobei der Resonanzkreis 17 parallel zu den zwei in Serie geschalteten Kondensatoren des Gleichspannungskreises 3 geschaltet ist. Vorteilhaft lässt sich durch den Resonanzkreis 17 beispielsweise eine in der Gleichspannung des Gleichspannungskreises 3 auftretende Oberschwingung tiefer Ordnung bezüglich der bezüglich der Grundschwingung der Spannung des elektrischen Wechselspannungsnetzes 11, wie zum Beispiel die zweite Oberschwingung, durch entsprechende Abstimmung ausfiltern.

Darüber hinaus ist gemäss Fig. 4 zwischen der Gleichrichtereinheit 2 und dem Gleichspannungskreis 3 eine Glättungsinduktivität 18 eingeschaltet. Diese Glättungsinduktivität 18 dient vorteilhaft der Glättung des Gleichstromes des Gleichspannungszwischenkreises 3.

Desweiteren ist gemäss Fig. 4 zwischen dem Gleichspannungskreis 3 und der Wechselrichtereinheit 4 vorzugsweise eine Stromanstiegsbegrenzungsschaltung 19 eingeschaltet, welche insbesondere mit dem ersten Hauptanschluss 14, mit dem zweiten Hauptanschluss 15 und mit dem Teilanschluss 16 des Gleichspannungskreises 3 verbunden sind, wobei dann die beiden Zweigpaare 13 entsprechend Fig. 4 mit der Stromanstiegsbegrenzungsschaltung 19 verbunden sind. Mittels der Stromanstiegsbegrenzungsschaltung 19 lassen sich vorteilhaft Stromsteilheiten, die bei Schalthandlungen der Leistungshalbleiterschalter S1, S2, S3, S4, S5, S6 entstehen und über dem maximal zulässigen Wert der Leistungshalbleiterschalter S1, S2, S3, S4, S5, S6 liegen, begrenzen.

Es versteht sich, dass die Teilumrichterschaltung 1 gemäss Fig. 4 mit den vorstehend beschriebenen Komponenten 17, 18 19 auch mit der zweiten Ausführungsform der Wechselrichtereinheit 4 nach Fig. 5 ausgeführt sein kann.

Im Unterschied zur Teilumrichterschaltung 1 gemäss Fig. 4 ist es auch denkbar, dass der Gleichspannungskreis 3 nur durch nur einen Kondensator gebildet ist, wobei der Gleichspannungskreis 3 dann lediglich einen ersten und zweiten Hauptanschluss 14, 15, jedoch keinen Teilanschluss 16 aufweist. Die Wechselrichtereinheit 4 weist dann zwei Zweigpaare zur Schaltung von zwei Schaltspannungsniveaus auf, wobei die Zweigpaare mit dem ersten und zweiten Hauptanschluss 14, 15 verbunden sind. Es versteht sich, dass eine solche Teilumrichterschaltung 1 ebenfalls mit den in Fig. 4 gezeigten und beschriebenen Komponenten 17, 18 19 ausgeführt sein kann.

Bei der erfindungsgemässen Umrichterschaltung nach Fig. 3 ist jeder Wechselrichtereinheit 4 eine lokale Reglereinheit 20 zugeordnet, wobei ansteuerbare Leistungshalbleiterschalter S1, S2, S3, S4, S5, S6 der Wechselrichtereinheit 4 mit der zugeordneten lokalen Reglereinheit 20 verbunden sind. Desweiteren ist eine mit jeder lokalen Reglereinheit 20 verbundene übergeordnete Reglereinheit 21 vorgesehen. Vorzugsweise ist der übergeordneten Reglereinheit 21 gemäss Fig. 3 eingangsseitig jeder Phasenanschlussstromistwert $I_{R,ist}$, $I_{S,ist}$, $I_{T,ist}$ eines jeden Phasenanschlusses 6, der Drehmomentistwert $M_{ist}$ und der magnetische Flussistwert $\Phi_{ist}$ einer mit den Phasenanschlüssen 5 verbindbaren rotierenden elektrischen Maschine zugeführt. Der Drehmomentistwert $M_{ist}$ und der magnetische Flussistwert $\Phi_{ist}$ werden durch einen separaten, in Fig. 3 der Übersichtlichkeit halber nicht dargestellten Beobachter aus den Phasenanschlussstromistwerten $I_{R,ist}$, $I_{S,ist}$, $I_{T,ist}$ und den Phasenanschlussspannungsistwerten beobachtet. Ferner liegt am Ausgang der übergeordneten Reglereinheit 21 ein Spannungsreferenzwert $U_{ref}$ an, der jeder lokalen Reglereinheit 20 eingangsseitig zugeführt ist. Vorteilhaft dient die übergeordnete Reglereinheit 21 der Beobachtung der Grössen der elektrischen Maschine wie Drehmomentistwert $M_{ist}$ und magnetischer Flussistwert $\Phi_{ist}$. Die übergeordnete Reglereinheit 21 dient der Drehmomentregelung sowie der Systemsteuerung der gesamten Umrichterschaltung. Die lokalen Reglereinheiten 20 dienen mit Vorteil der Regelung des Potentials des Mittelpunktes des Gleichspannungskreises 3 der jeweiligen Teilumrichterschaltung. Aus dem Spannungsreferenzwert $U_{ref}$ werden dann entsprechende Schaltsignale zur Ansteuerung der ansteuerbaren Leistungshalbleiterschalter S1, S2, S3, S4, S5, S6 der zugehörigen Wechselrichtereinheit 4 erzeugt, so dass die am jeweiligen Phasenanschluss 6 anliegende Phasenspannung im ausgeregelten Zustand dem zugehörigen Spannungsreferenzwert $U_{rel}$ entspricht. Diese verteilte Struktur von lokalen Reglereinheiten 20 und übergeordneter Reglereinheit 21 reduziert die Anzahl notwendiger Verbindungen innerhalb der gesamten Umrichterschaltung und ermöglicht es, dass phasenbezogene Regelaufgaben auf den ansteuerbaren Leistungshalbleiterschalter S1, S2, S3, S4, S5, S6 lokal gelöst werden.

## Bezugszeichenliste

| | |
|---|---|
| 1 | Teilumrichterschaltung |
| 2 | Gleichrichtereinheit |
| 3 | Gleichspannungskreis |
| 4 | Wechselrichtereinheit |
| 5 | erste Wechselspannungsausgang |
| 6 | Phasenanschluss |
| 7 | Transformator |
| 8 | Primärwicklung |
| 9 | Sekundärwicklung |
| 10 | Sekundärwicklungssatz |
| 11 | elektrisches Wechselspannungsnetz |
| 12 | zweiter Wechselspannungsausgang |
| 13 | Zweigpaar |
| 14 | ersten Hauptanschluss des Gleichspannungskreises |
| 15 | zweiter Hauptanschluss des Gleichspannungskreises |
| 16 | Teilanschluss des Gleichspannungskreises |
| 17 | Resonanzkreis |
| 18 | Glättungsinduktivität |
| 19 | Stromanstiegsbegrenzungsschaltung |
| 20 | lokale Reglereinheit |
| 21 | übergeordnete Reglereinheit |

## Patentansprüche

1. Mehrphasige Umrichterschaltung mit $p \geq 3$ Phasen (R, S; T) und einer für jede Phase (R, S, T) vorgesehenen Teilumrichterschaltung (1), wobei jede Teilumrichterschaltung (1) eine einzige Gleichrichtereinheit (2), einen mit der Gleichrichtereinheit (2) verbundenen Gleichspannungskreis (3) und eine mit dem Gleichspannungskreis (4) verbundene Wechselrichtereinheit (4) aufweist,

   und wobei ein erster Wechselspannungsausgang (5) einer jeden Wechselrichtereinheit (4) einen Phasenanschluss (6) bildet und zweite Wechselspannungsausgänge (12) der Wechselrichtereinheiten (5) in Sternschaltung verschaltet sind,

   **dadurch gekennzeichnet,**

   **dass** n Transformatoren (7) mit jeweils einer Primärwicklung (8) und mit jeweils m dreiphasigen Sekundärwicklungen (9) vorgesehen sind, wobei $n \geq 2$ und $m \geq 3$ ist,

   **dass** p Sekundärwicklungssätze (10) vorgesehen sind, wobei jeder Sekundärwicklungssatz (10) durch jeweils $\dfrac{m}{p}$ dreiphasige Sekundärwicklungen (9) eines jeden Transformators (7) gebildet ist,

   **dass** jeder Sekundärwicklungssatz (10) mit den zugehörlgen Sekundärwicklungen (9) mit der Gleichrichtereinheit (2) jeweils einer Teilumrichterschaltung (1) verbunden ist, und

**dass** die dreiphasigen Sekundärwicklungen (9) bezüglich eines Sekundärwicklungssatzes (10) zueinander phasenverschoben sind, wobei die Phasenverschiebung bezüglich jeweils zweier Sekundärwicklungen (9) eines Sekundärwicklungssatzes (10) ein ganzzahliges Vielfaches von $(\frac{60 \cdot p}{n \cdot m})$ Grad beträgt.

2. Umrichterschaltung nach Anspruch 1, **dadurch gekennzeichnet, dass** die dreiphasigen Sekundärwicklungen (9) bezüglich eines Transformators (7) zueinander phasenverschoben sind.

3. Umrichterschaltung nach Anspruch 2, **dadurch gekennzeichnet, dass** die Phasenverschiebung bezüglich jeweils zweier Sekundärwicklungen (9) eines Transformators (7) ein ganzzahliges Vielfaches von $(\frac{360}{x \cdot p})$ Grad beträgt, wobei x die Pulsigkeit einer Gleichrichtereinheit (2) ist.

4. Umrichterschaltung nach Anspruch 2, **dadurch gekennzeichnet, dass** die Phasenverschiebung bezüglich jeweils zweier Sekundärwicklungen (9) eines Transformators (7) ein ganzzahliges Vielfaches von $(\frac{60}{n \cdot m})$ Grad beträgt.

5. Umrichterschaltung nach einem der vorhergehenden Ansprüche, **dadurch gekennzeichnet, dass** die Primärwicklungen (8) der Transformatoren (7) zueinander phasenverschoben sind.

6. Umrichterschaltung nach Anspruch 5, **dadurch gekennzeichnet, dass** die Phasenverschiebung bezüglich jeweils zweier Primärwicklungen (8) ein ganzzahliges Vielfaches von 60/n Grad beträgt.

7. Umrichterschaltung nach einem der vorhergehenden Ansprüche, **dadurch gekennzeichnet, dass** der Gleichspannungskreis (3) einen auf eine Oberschwingungsfrequenz abgestimmten Resonanzkreis (17) aufweist.

8. Umrichterschaltung nach einem der vorhergehenden Ansprüche, **dadurch gekennzeichnet, dass** zwischen der Gleichrichtereinheit (2) und dem Gleichspannungskreis (3) eine Glättungsinduktivität (18) eingeschaltet ist.

9. Umrichterschaltung nach einem der vorhergehenden Ansprüche, **dadurch gekennzeichnet, dass** zwischen dem Gleichspannungskreis (3) und der Wechselrichtereinheit (4) eine Stromanstiegsbegrenzungsschaltung (19) eingeschaltet ist.

10. Umrichterschaltung nach einem der vorhergehenden Ansprüche, **dadurch gekennzeichnet, dass** jeder Wechselrichtereinheit (4) eine lokale Reglereinheit (20) zugeordnet ist, wobei ansteuerbare Leistungshalbleiterschalter (S1, S2, S3, S4, S5, S6) der Wechselrichtereinheit (4) mit der zugeordneten lokalen Reglereinheit (20) verbunden sind, und dass eine mit jeder lokalen Reglereinheit (20) verbundene übergeordnete Reglereinheit (21) vorgesehen ist.

11. Umrichterschaltung nach Anspruch 10, **dadurch gekennzeichnet, dass** der übergeordneten Reglereinheit (21) eingangsseitig jeder Phasenanschlussstromistwert ($I_{R,ist}$, $I_{S,ist}$, $I_{T,ist}$) eines jeden Phasenanschlusses (6), der Drehmomentistwert ($M_{ist}$) und der magnetische Flussistwert ($\Phi_{ist}$) einer mit den Phasenanschlüssen (5) verbindbaren rotierenden elektrischen Maschine zugeführt ist, und dass am Ausgang der übergeordneten Reglereinheit (21) eine Referenzspannung ($U_{ref}$) anliegt und jeder lokalen Reglereinheit (20) eingangsseitig zugeführt ist.

**Claims**

1.

Polyphase converter circuit having p ≥ 3 phases (R, Y, B) and a converter circuit element (1) provided for each phase (R, Y, B), each converter circuit element (1) having a single rectifier unit (2), a DC voltage circuit (3) which is connected to the rectifier unit (2) and an inverter unit (4) which is connected to the DC voltage circuit (3), and a first AC voltage output (5) of each inverter unit (4) forming a phase connection (6), and second AC voltage outputs (12) of the inverter units (4) being star-connected,

**characterized**

**in that** n transformers (7) are provided, each having a primary winding (8) and m three-phase secondary windings (9), where n ≥ 2 and m ≥ 3,

**in that** p sets of secondary windings (10) are provided, each set of secondary windings (10) being formed by in each case $\frac{m}{p}$ three-phase secondary windings (9) of each transformer (7),

**in that** each set of secondary windings (10) with the associated secondary windings (9) is connected to the rectifier unit (2) of a respective converter circuit element (1), and in that the three-phase secondary windings (9) are phase-shifted in relation to one another with respect to a set of secondary windings (10), the phase shift with respect to in each case two secondary windings (9) of a set of secondary windings (10) being an integral multiple of $(\dfrac{60 \cdot p}{n \cdot m})$ degrees.

2. Converter circuit according to Claim 1, **characterized in that** the three-phase secondary windings (9) are phase-shifted in relation to one another with respect to a transformer (7).

3. Converter circuit according to Claim 2, **characterized in that** the phase shift with respect to in each case two secondary windings (9) of a transformer (7) is an integral multiple of $(\dfrac{360}{x \cdot p})$ degrees, where x is the pulse number of a rectifier unit (2).

4. Converter circuit according to Claim 2, **characterized in that** the phase shift with respect to in each case two secondary windings (9) of a transformer (7) is an integral multiple of $(\dfrac{60}{n \cdot m})$ degrees.

5. Converter circuit according to one of the preceding claims, **characterized in that** the primary windings (8) of the transformers (7) are phase-shifted in relation to one another.

6. Converter circuit according to Claim 5, **characterized in that** the phase shift with respect to in each case two primary windings (8) is an integral multiple of 60/n degrees.

7. Converter circuit according to one of the preceding claims, **characterized in that** the DC voltage circuit (3) has a resonant circuit (17) which is tuned to a harmonic frequency.

8. Converter circuit according to one of the preceding claims, **characterized in that** a smoothing inductance (18) is connected between the rectifier unit (2) and the DC voltage circuit (3).

9. Converter circuit according to one of the preceding claims, **characterized in that** a current rise limit circuit (19) is connected between the DC voltage circuit (3) and the inverter unit (4).

10. Converter circuit according to one of the preceding claims, **characterized in that** each inverter unit (4) has an associated local controller unit (20), drivable power semiconductor switches (S1, S2, S3, S4, S5, S6) of the inverter unit (4) being connected to the associated local controller unit (20), and

**in that** a higher-order controller unit (21) is provided which is connected to each local controller unit (20).

11. Converter circuit according to Claim 10, **characterized in that** the higher-order controller unit (21) is fed, on the input side, each phase connection current actual value ($I_{R,act.}$, $I_{Y,act.}$, $I_{B, act.}$) of each phase connection (6), the torque actual value ($M_{act.}$) and the magnetic flux actual value ($\Phi_{act.}$) of a rotating electrical machine which can be connected to the phase connections (5), and
**in that** a reference voltage ($U_{ref}$) is present at the output of the higher-order controller unit (21) and is fed to each local controller unit (20) on the input side.

## Revendications

1. Circuit convertisseur statique multiphasé comprenant $p \geq 3$ phases (R, S, T) et un circuit convertisseur statique partiel (1) prévu pour chaque phase (R, S, T), chaque circuit convertisseur statique partiel (1) présentant une unique unité redresseur (2), un circuit de tension continue (3) relié avec l'unité redresseur (2) et une unité onduleur (4) reliée avec le circuit de tension continue (3),
   et une première sortie de tension alternative (5) de chacune des unités onduleur (4) formant une borne de phase (6) et des deuxièmes sorties de tension alternative (12) des unités onduleur (4) étant branchées en étoile,
   **caractérisé en ce**
   **que** sont prévus n transformateurs (7) ayant respectivement un enroulement primaire (8) et ayant respectivement m enroulements secondaires (9) triphasés, n étant $\geq 2$ et m $\geq 3$,
   **que** p jeux d'enroulements secondaires (10) sont prévus, chaque jeu d'enroulements secondaires (10) étant à chaque fois formé par m/p enroulements secondaires (9) triphasés de chaque transformateur (7),
   **que** chaque jeu d'enroulements secondaires (10) avec les enroulements secondaires (9) associés est relié avec l'unité redresseur (2) d'un circuit convertisseur statique partiel (1) respectif,
   et
   **que** les enroulements secondaires (9) triphasés sont déphasés entre eux en référence à un jeu d'enroulements secondaires (10), le déphasage en référence à deux enroulements secondaires (9) respectifs d'un jeu d'enroulements secondaires (10) étant un multiple entier de (60.p) / (n.m) degrés.

2. Circuit convertisseur statique selon la revendication 1, **caractérisé en ce que** les enroulements secondaires (9) triphasés sont déphasés entre eux en référence à un transformateur (7).

**3.** Circuit convertisseur statique selon la revendication 2, **caractérisé en ce que** le déphasage en référence à deux enroulements secondaires (9) respectifs d'un transformateur (7) est un multiple entier de (360)/(x.p) degrés, x désignant le caractère impulsionnel d'une unité redresseur (2).

**4.** Circuit convertisseur statique selon la revendication 2, **caractérisé en ce que** le déphasage en référence à deux enroulements secondaires (9) respectifs d'un transformateur (7) est un multiple entier de (60) / (n.m) degrés.

**5.** Circuit convertisseur statique selon l'une des revendications précédentes, **caractérisé en ce que** les enroulements primaires (8) des transformateurs (7) sont mutuellement déphasés.

**6.** Circuit convertisseur statique selon la revendication 5, **caractérisé en ce que** le déphasage en référence à deux enroulements primaires (8) respectifs est un multiple entier de 60/n degrés.

**7.** Circuit convertisseur statique selon l'une des revendications précédentes, **caractérisé en ce que** le circuit de tension continue (3) présente un circuit de résonance (17) accordé sur une fréquence harmonique.

**8.** Circuit convertisseur statique selon l'une des revendications précédentes, **caractérisé en ce qu'**une inductance de lissage (18) est connectée entre l'unité redresseur (2) et le circuit de tension continue (3).

**9.** Circuit convertisseur statique selon l'une des revendications précédentes, **caractérisé en ce qu'**un circuit de limitation de la croissance du courant (19) est connecté entre le circuit de tension continue (3) et l'unité onduleur (4).

**10.** Circuit convertisseur statique selon l'une des revendications précédentes, **caractérisé en ce qu'**à chaque unité onduleur (4) est associée une unité de régulation locale (20), des commutateurs semiconducteurs de puissance commandables (S1, S2, S3, S4, S5, S6) de l'unité onduleur (4) étant reliés avec l'unité de régulation (20) locale associée, et **en ce qu'**il est prévu une unité de régulation superviseuse (21) reliée avec chaque unité de régulation (20) locale.

**11.** Circuit convertisseur statique selon la revendication 10, **caractérisé en ce que** chaque valeur réelle du courant de borne de phase ($I_{R,ist}$, $I_{S,ist}$, $I_{T,ist}$) de chacune des bornes de phase (6), la valeur réelle du couple ($M_{ist}$) et la valeur réelle du flux magnétique ($\Phi_{ist}$) d'une machine électrique rotative pouvant être reliée avec les bornes de phase (5) sont acheminées à l'entrée de l'unité de régulation superviseuse (21), et **en ce qu'**une tension de référence ($U_{ref}$) est présente à la sortie de l'unité de régulation superviseuse (21) et est acheminée à l'entrée de chaque unité de régulation (20) locale.

Fig. 1

11 8 7 9 10 9 9 10 10 1 2 3 4 5 12 6

R

S

T

EP 1 759 450 B1

Fig. 2

Fig. 3

EP 1 759 450 B1

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0913918 A2
- GB 2330254 A